# EUROPEAN PATENT SPECIFICATION

(11) **EP 2 594 769 B1**
(45) Date of publication and mention of the grant of the patent: **10.01.2018**
(21) Application number: 12190385.0
(22) Date of filing: 29.10.2012
(51) Int. Cl.: F02D 41/02, F02D 41/40, F02D 41/14

(54) **Exhaust purification apparatus of engine**
Abgasreinigungsvorrichtung eines Motors
Dispositif de purification des gaz d'échappement de moteur

(30) Priority: 18.11.2011 JP 2011253292
(43) Date of publication of application: 22.05.2013
(73) Proprietor: Mitsubishi Jidosha Kogyo Kabushiki Kaisha, Tokyo 108-8410 (JP)
(72) Inventor: Kanayama, Kuniki, Tokyo, Tokyo 108-8410 (JP); Koga, Noriyuki, Tokyo, Tokyo 108-8410 (JP); Hata, Michihiro, Tokyo, Tokyo 108-8410 (JP)
(74) Representative: Vossius & Partner Patentanwälte Rechtsanwälte mbB

(56) References cited:
- EP-A1- 0 984 142
- EP-A2- 2 184 469
- FR-A1- 2 927 372
- FR-A1- 2 950 930
- JP-A- 2004 360 575
- US-A1- 2002 157 386
- US-A1- 2008 039 975
- US-A1- 2011 120 098

## Description

This invention relates to an exhaust purification apparatus of an engine. More specifically, the invention relates to a technology which supplies the fuel or the like as a reducing agent to an exhaust to regenerate an exhaust purification catalyst.

An exhaust gas discharged from an engine installed in an automobile or the like contains exhaust gas components, such as carbon monoxide (CO), hydrocarbons (HC), nitrogen oxides (NOₓ), and particulate matter (PM). An exhaust path of the engine, therefore, is provided with, for example, a three way catalyst for decomposing (for example, bringing to reduction) these substances, and a particulate filter for trapping PM.

In the case of an engine, such as a diesel engine, whose air-fuel ratio is controlled to a lean air-fuel ratio side as compared with a stoichiometric air-fuel ratio to perform combustion in an oxidizing atmosphere, the three way catalyst cannot fully purify the nitrogen oxides (NOₓ) in the exhaust gas. Some exhaust paths of this type of engine, therefore, have a NOₓ storage catalyst, an exhaust purification catalyst, provided together with the three way catalyst. The NOₓ storage catalyst stores NOₓ contained in the exhaust when the air-fuel ratio of the exhaust is lean, but releases and reduces the stored NOₓ when the air-fuel ratio of the exhaust is rich. In the diesel engine or the like, the air-fuel ratio of the exhaust is normally lean, so that nitrogen oxides are stored in the NOₓ storage catalyst. Thus, there is need to carry out a regeneration process (NOₓ purge) in which a fuel (light oil) or the like, for example, is injected into the exhaust path with a predetermined timing to enrich the air-fuel ratio of the exhaust, thereby decomposing (reducing) the NOₓ stored in the NOₓ storage catalyst.

The fuel also contains a sulfur component as a noxious component. Thus, the sulfur component reacts with oxygen to turn into sulfur oxides (SOₓ), which are absorbed to the NOₓ storage catalyst instead of NOₓ (Spoisoning). It is necessary, therefore, to perform a regeneration process (S purge) for removing the sulfur oxides (SOₓ) with a predetermined timing. This regeneration process (S purge) requires that the air-fuel ratio of the exhaust be enriched as in the NOₓ purge, and the NOₓ storage catalyst be heated to a high temperature equal to or higher than a predetermined temperature.

Various proposals have been made for the regeneration process (Spurge). An example comprises controlling a fuel inj ection means, which injects a fuel (reducing agent), while maintaining the NOₓ storage catalyst in a rich atmosphere, to repeat, alternately, periods of frequent fuel addition and periods of infrequent fuel addition, thereby heating the NOₓ storage catalyst to a high temperature (see, for example, Patent Document 1).

[Patent Document 1] Japanese Patent No. 3972864

EP 0 984 142 A1 relates to a particulate filter being arranged in the exhaust passage of an engine. Only the inner wall surface of downstream end open cells of the particulate filter is covered with a NOx adsorbent), and the inner wall surface of the upstream end open cells is covered with a HC adsorbent.

US 2008/039975 A1 relates to a control device for an internal combustion engine that can execute a sulfur purge under all conditions without complicating the control action or the engine structure. The process comprises detecting a temperature of the NOx catalytic converter, detecting an exhaust air fuel ratio in the catalytic converter, computing a target exhaust air fuel ratio according to a detected temperature of the NOx catalytic converter, and controlling a fuel injection valve so as to make an actual exhaust fuel ratio agree with the target exhaust air fuel ratio.

FR 2 927 372 A1 describes a method which involves determining a cylinder richness reference input and a global richness reference input. A fuel flow is injected, after regulating the richness during a regeneration of sulfur products of a nitrogen oxide trap.

US 2011/120098 A1 provides a technique that can complete reduction and release of SOx from a storage-reduction type NOx catalyst in a short period of time in a SOx regeneration treatment.

By so repeating the periods of frequent fuel addition and the periods of infrequent fuel addition alternately during the S purge, it becomes possible to suppress the emission of HC and efficiently release SOₓ. If the temperature of the NOₓ storage catalyst falls during the S purge, however, the problem arises that the amounts of sulfur oxides released decrease accordingly. That is, the efficiency of the S purge may decline.

When the temperature of the NOₓ storage catalyst falls, the amounts of emission of hydrocarbons (HC), etc. also increase. With the invention described in Patent Document 1, when the catalyst temperature is low, discharge of hydrocarbons (HC) is suppressed by increasing the proportion of the periods of infrequent fuel addition, but in accordance with this increase, the amount of removal of sulfur oxides is also decreased (see Fig. 3). That is, the invention described in Patent Document 1 also poses the problem that the efficiency of S purge lowers.

The temperature regulation of the NOₓ storage catalyst during the regeneration process is performed, for example, by changing the frequency of fuel addition to the exhaust. Concretely, when the temperature of the NOₓ storage catalyst is to be raised, the frequency of fuel addition is increased, but when the temperature of the NOₓ storage catalyst is to be lowered, the frequency of fuel addition is decreased. However, the mere adjustment of the frequency of fuel addition is limited in the temperature range operable, posing difficulty in appropriately regulating the temperature of the NOₓ storage catalyst.

The present invention has been accomplished in the light of the above-mentioned situations. It is an object of this invention to provide an exhaust purification apparatus of an engine, which can regulate the temperature of an exhaust purification catalyst appropriately and can release components of an exhaust efficiently by a regeneration process.

This object can be achieved by the features defined in the claims.

Particularly, a first aspect of the present invention for solving the above problems is an exhaust purification apparatus of an engine, comprising: fuel injection means for injecting fuel into a cylinder of an engine; an exhaust purification catalyst provided in an exhaust path of the engine for purifying an exhaust; temperature detection means for detecting a temperature (Te1) of the exhaust purification catalyst; regeneration process execution means for performing a regeneration process which supplies a hydrocarbon into the exhaust flowing into the exhaust purification catalyst to keep rich an air-fuel ratio of the exhaust flowing out of the exhaust purification catalyst, and which renders the temperature of the exhaust purification catalyst equal to or higher than a set temperature (Te2) to release exhaust components stored in the exhaust purification catalyst; and oxygen concentration adjusting means for adjusting an oxygen concentration of the exhaust at a time of supply of the hydrocarbon by the regeneration process execution means, in accordance with a temperature difference (Te3) between the temperature of the exhaust purification catalyst detected by the temperature detection means and the set temperature, during execution of the regeneration process by the regeneration process execution means.

A second aspect of the present invention is the exhaust purification apparatus of an engine according to the first aspect, characterized in that the oxygen concentration adjusting means lowers the oxygen concentration of the exhaust as the temperature difference (Te3) becomes greater when the temperature (Te1) of the exhaust purification catalyst is higher than the set temperature (Te2).

A third aspect of the present invention is the exhaust purification apparatus of an engine according to the first or second aspect, characterized in that the oxygen concentration adjusting means raises the oxygen concentration of the exhaust as the temperature difference (Te3) becomes greater when the temperature (Te1) of the exhaust purification catalyst is lower than the set temperature (Te2).

A fourth aspect of the present invention is the exhaust purification apparatus of an engine according to any one of the first to third aspects, characterized in that the regeneration process execution means performs, with a predetermined timing, a rich interruption process in which supply of a reducing agent into the exhaust is interrupted to lean the air-fuel ratio of the exhaust flowing out of the exhaust purification catalyst, and the oxygen concentration adjusting means raises the oxygen concentration of the exhaust, regardless of the temperature difference (Te3) between the temperature (Te1) of the exhaust purification catalyst and the set temperature (Te2), during a period (Tb) during which the rich interruption process is performed.

According to the first aspect of the present invention, the oxygen concentration adjusting means controls the fuel injection means to change an amount of the fuel burned in the cylinder of the engine.

The oxygen concentration adjusting means changes a fuel injection volume by post-injection (Po1) during combustion to be performed with a timing which continues from combustion by main injection and with which combustion is possible.

A fifth aspect of the present invention is the exhaust purification apparatus of an engine according to any one of the first to fourth aspects, characterized in that the regeneration process execution means performs post-injection (Po2) after combustion, in which the fuel is injected from the fuel injection means after combustion by main injection, thereby supplying the hydrocarbon into the exhaust.

A sixth aspect of the present invention is the exhaust purification apparatus of an engine according to the fifth aspect, characterized in that the regeneration process execution means exercises feedforward control such that an interval between implementations of the post-injection (Po2) after combustion by the fuel injection means is shorter than a period during which fuel is injected.

A seventh aspect of the present invention is the exhaust purification apparatus of an engine according to the sixth aspect, characterized in that the regeneration process execution means terminates the feedforward control when the air-fuel ratio of the exhaust is richer than a predetermined air-fuel ratio, which has been set beforehand, within a rich continuation period (Ta) of the regeneration process.

An eighth aspect of the present invention is the exhaust purification apparatus of an engine according to the seventh aspect characterized in that the regeneration process execution means exercises feedback control of a fuel injection volume from the fuel inject ion means so as to bring the air-fuel ratio of the exhaust close to a target air-fuel ratio after terminating the feedforward control.

According to the present invention described above, the temperature of the exhaust purification catalyst is appropriately regulatedduring the execution of the regeneration process, whereby a fall in the temperature of the exhaust purification catalyst can be suppressed. Hence, sulfur oxides (SOₓ) and nitrogen oxides (NOₓ), for example, can be discharged efficiently from the exhaust purification catalyst by the regeneration process.

This invention is described in detail in conjunction with the drawings, in which:
[Fig. 1] is a schematic configurational drawing showing an engine including an exhaust purification apparatus according to an embodiment of the present invention,
[Fig. 2] is a graph showing the course of the catalyst air-fuel ratio during S purge, and the course of the fuel injection volume by post-injection after combustion,
[Fig. 3] is a view showing the timing of fuel injection during each operation in relation to the cylinder pressure,
[Fig. 4] is a graph showing an example of changes in the catalyst temperature during S purge, and
[Fig. 5] is a flow chart showing an example of control during S purge by the exhaust purification apparatus according to the embodiment of the present invention.

The embodiment of the present invention will now be described in detail with reference to the accompanying drawings.

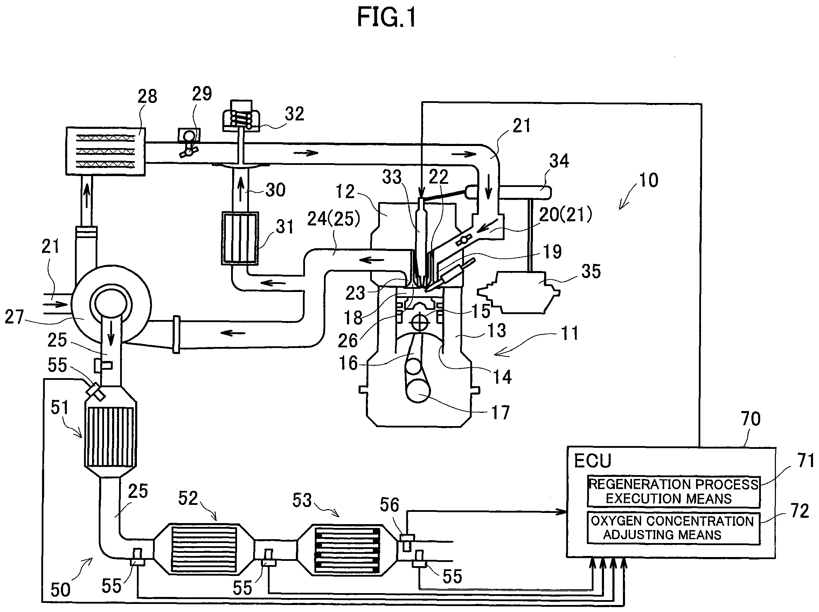

The overall configuration of an engine 10 including an exhaust purification apparatus according to the embodiment of the present invention will be described first. The engine 10 shown in Fig. 1 is a diesel engine, in which an engine body 11 includes a cylinder head 12 and a cylinder block 13, and a piston 15 is accommodated within each cylinder bore 14 of the cylinder block 13. The piston 15 is connected to a crankshaft 17 via a connecting rod 16. The piston 15, the cylinder bore 14, and the cylinder head 12 constitute a combustion chamber 18.

An intake port 19 is formed in the cylinder head 12, and an intake pipe (intake path) 21 including an intake manifold 20 is connected to the intake port 19. An intake valve 22 is provided within the intake port 19, and the intake port 19 is opened and closed by the intake valve 22. An exhaust port 23 is formed in the cylinder head 12, and an exhaust pipe (exhaust path) 25 including an exhaust manifold 24 is connected to the interior of the exhaust port 23. The exhaust port 23 is provided with an exhaust valve 26 and, like the intake port 19, the exhaust port 23 is opened and closed by the exhaust valve 26.

A turbocharger 27 is provided halfway through the intake pipe 21 and the exhaust pipe 25. An intercooler 28 is disposed in the intake pipe 21 downstream of the turbocharger 27. A throttle valve 29 for opening and closing the intake pipe (intake path) 21 is provided in the intake pipe 21 downstream of the intercooler 28. An EGR pipe (EGR path) 30 communicating with the exhaust pipe 25 upstream of the turbocharger 27 is connected to the intake pipe 21 downstream of the throttle valve 29. An EGR cooler 31 is provided in the EGR pipe 30, and an EGR valve 32 is provided in a junction of the EGR pipe 30 with the intake pipe 21.

The cylinder head 12 is provided with a fuel injection valve 33 for injecting a fuel into the combustion chamber 18 of each cylinder. The fuel injection valve 33 is supplied with a fuel from a common-rail 34. The common-rail 34 is supplied with a fuel in a fuel tank (not shown) by a supply pump 35, and the fuel is supplied at a predetermined pressure from the supply pump 35 to the common-rail 34 in accordance with the rotational speed of the engine body 11. In the common-rail 34, the fuel is adjusted to a predetermined fuel pressure, and a high pressure fuel controlled to the predetermined fuel pressure is supplied from the common-rail 34 to the fuel injection valve 33.

In the exhaust pipe 25 downstream of the turbocharger 27, a diesel oxidation catalyst (will hereinafter be referred to simply as an oxidation catalyst) 51, a NOₓ storage catalyst 52 as an exhaust purification catalyst, and a diesel particulate filter (DPF; will hereinafter be referred to as DPF) 53 , which constitute an exhaust purification apparatus 50 according to the present embodiment, are arranged in this order, starting on an upstream side.

Exhaust temperature sensors 55 are providednear the entrances of the oxidation catalyst 51, the NOₓ storage catalyst 52 and the DPF 53 and near an exit from the DPF 53. Furthermore, an air-fuel ratio sensor 56 for detecting the air-fuel ratio of an exhaust gas is provided near the exit of the DPF 53. In the present embodiment, as will be described later, the air-fuel ratio of the exhaust flowing out of the NOₓ storage catalyst 52 (hereinafter will also be referred to as "catalyst air-fuel ratio") is detected by this air-fuel ratio sensor 56. The air-fuel ratio sensor 56 may be one which detects the oxygen concentration in the exhaust gas.

The oxidation catalyst 51 comprises, for example, a precious metal, such as platinum (Pt) or palladium (Pd), carried on a carrier of a honeycomb structure formed from a ceramic material. When the exhaust gas flows into the oxidation catalyst 51, nitrogen monoxide (NO) in the exhaust gas is oxidized to formnitrogen dioxide (NO₂).

The NOₓ storage catalyst 52 comprises, for example, a precious metal, such as platinum (Pt) or palladium (Pd), carried on a carrier of a honeycomb structure formed from a ceramic material, and also has an alkali metal or an alkaline earth metal, such as barium (Ba), carried as a storage agent on the carrier. In the NOₓ storage catalyst 52, NOₓ, which is an exhaust component, is once stored in an oxidizing atmosphere, and the NOₓ is released in a reducing atmosphere containing, for example, carbon monoxide (CO), hydrocarbons (HC), etc. , and is thereby reduced to nitrogen (N₂) or the like. Normally, in the NOₓ storage catalyst 52, NOₓ is only adsorbed, and the adsorbed NOₓ is not decomposed (reduced) . When a predetermined amount of NOₓ is adsorbed to the NOₓ storage catalyst 52, the fuel (light oil) as a reducing agent is injected from the fuel injection valve 33. As a result, the exhaust gas mixed with the fuel is passed through the oxidation catalyst 51 and supplied to the NOₓ storage catalyst 52. Consequently, the interior of the NOₓ storage catalyst 52 is brought to a reducing atmosphere, and the stored NOₓ is decomposed (reduced) (NOₓ purge).

Moreover, the NOₓ storage catalyst 52 stores sulfur oxides (SOₓ), which are an exhaust component, as well as nitrogen oxides (NOₓ). As with NOₓ purge, the fuel (light oil) as a reducing agent is injected from the fuel injection valve 33 with a predetermined timing, and the NOₓ storage catalyst 52 is heated to a high temperature equal to or higher than a predetermined temperature, whereby the stored sulfur oxides (SOₓ) are decomposed (reduced) (S purge).

The DPF 53 is, for example, a filter of a honeycomb structure formed from a ceramic material. PM trapped by the DPF 53 is oxidized (burned) by NO₂ contained in the exhaust gas, and is discharged as CO₂. NO₂ remaining within the DPF 53 is decomposed into N₂, and discharged.

The engine 10 is equipped with an electronic control unit (ECU) 70, and the ECU 70 is furnished with an input-output device, a storage device for storing a control program, a control map, etc. , a central processing unit, and timers and counters. Based on information from each of the sensors, the ECU 70 exercises integrated control over the engine 10 loaded with the exhaust purification apparatus 50.

The ECU 70 concurrently functions as a part of the exhaust purification apparatus 50, and controls the fuel injection valve 33, as appropriate, based on information from the various sensors such as the exhaust temperature sensors 55 and the air-fuel ratio sensor 56. For example, the ECU 70 has a regeneration process execution means 71, and this regeneration process execution means 71 carries out the aforementioned regeneration process for the NOₓ storage catalyst 52 (S purge). With the S purge, the regenerationprocess execution means 71 controls the fuel injection valve 33 to inject fuel (hydrocarbon) intermittently with predetermined timings, thereby enriching the air-fuel ratio of the exhaust flowing out of the NOₓ storage catalyst 52 (catalyst air-fuel ratio). The catalyst air-fuel ratio is detected, for example, by the air-fuel ratio sensor 56 provided in the vicinity of the exit from the NOₓ storage catalyst 52.

With the S purge, moreover, the catalyst air-fuel ratio is enriched as described above, and the NOₓ storage catalyst 52 is heated to a high temperature equal to or higher than a set temperature. By so doing, sulfur compounds (SOₓ), as the exhaust component stored in the NOₓ storage catalyst 52, can be efficiently discharged by the S purge.

While the S purge is being carried out, however, the temperature of the NOₓ storage catalyst 52 (may hereinafter be referred to simply as "catalyst temperature") may change because of various factors. A fall in the catalyst temperature during the implementation of the S purge may decrease the amount of discharge of sulfur oxides (SOₓ) from the NOₓ storage catalyst 52. That is, the regeneration efficiency of the NOₓ storage catalyst 52 by the S purge may lower.

With the present invention, therefore, the amount of fuel burned within the cylinder of the engine 10 is changed according to the catalyst temperature. By this measure, the oxygen concentration of the exhaust at the time of supply of hydrocarbon into the exhaust by the regeneration process execution means 71 is adjusted so that the catalyst temperature during S purge is maintained at as constant a temperature as possible. Consequently, decreases or variations in the amount of discharge of sulfur oxides (SOₓ) from the NOₓ storage catalyst 52 are suppressed, and the NOₓ storage catalyst 52 can be efficiently regenerated.

The regeneration process (S purge) for the exhaust purification catalyst (NOₓ storage catalyst) in the exhaust purification apparatus 50 according to the present embodiment will be described in detail below.

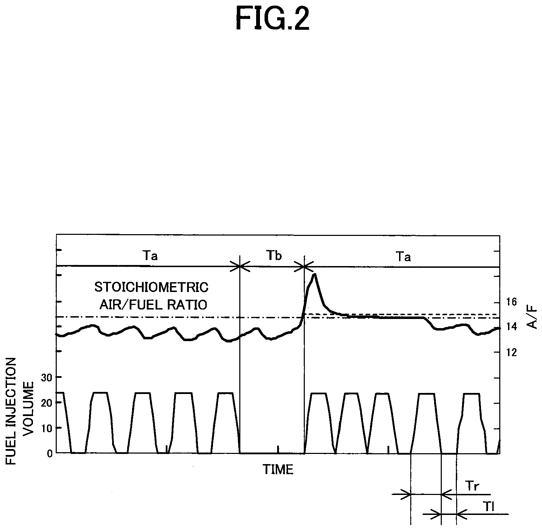

As shown in Fig. 2, when the regeneration process (S purge) is performed by the regeneration process execution means 71, rich continuation periods Ta during which the air-fuel ratio of the exhaust flowing out of the NOₓ storage catalyst 52 (catalyst air-fuel ratio) is kept rich, and rich interruption periods Tb during which the catalyst air-fuel ratio is rendered lean are implemented alternately and repeatedly.

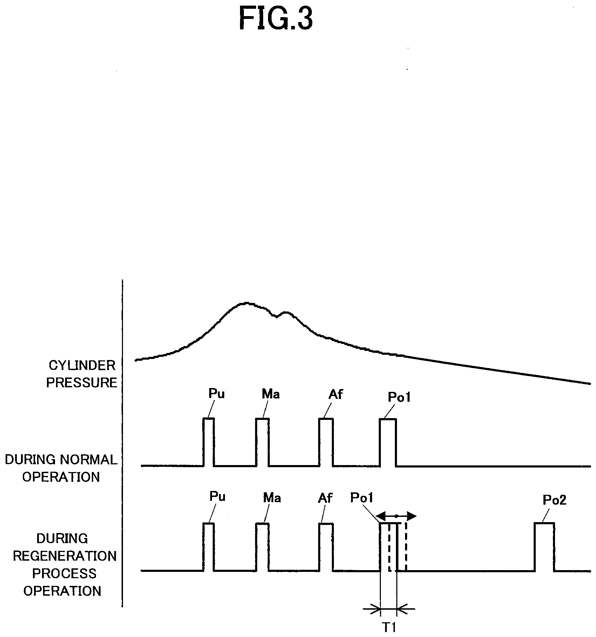

As shown in Fig. 3, pre-injection Pu, main-injection Ma and after-injection Af as the main injection by the fuel injection valve 33, and post-injection Po1 during combustion are performed during normal operation. The post-injection Po1 during combustion is post-injection to be carried out with a timing which continues from combustion by main injection and with which combustion is possible. In the present embodiment, the post-injection Po1 during combustion is performed subsequently to after-injection Af. During the regeneration-process (Spurge) operation, on the other hand, after post-injection Po1 during combustion is carried out, post-injection Po2 after combustion is further performed. Concretely, during the rich continuation periodTa, post-injections Po2 after combustion are intermittently carried out so that the catalyst air-fuel ratio is kept rich. During the rich interruption period Tb, the post-injection Po2 after combustion is temporarily interrupted so that the catalyst air-fuel ratio becomes lean.

The post-injection Po2 after combustion refers to post-injection which is performed after completion of combustion by main injection (including, in the present embodiment, pre-injection Pu, main-injection Ma, and after-injection Af). Upon implementation of this post-injection Po2 after combustion, fuel (hydrocarbon) as a reducing agent is supplied to the exhaust. By supplying fuel by means of the post-injection Po2 after combustion, the path length beginning with the supply of fuel and ending at the NOₓ storage catalyst 52 is increased to promote the mixing of fuel and exhaust. By this procedure, the reaction in the catalyst is ameliorated compared with the supply of fuel in the vicinity of the catalyst, and the deposition of fuel (hydrocarbon) on the catalyst is suppressed. Thus, the exhaust flowing into the NOₓ storage catalyst 52 during fuel supply and after completion of fuel supply becomes easy to guide into a desired air-fuel ratio. Hence, fuel supply by the post-injection Po2 after combustion facilitates control of the catalyst temperature, as compared with fuel supply near the catalyst.

With the present embodiment, moreover, the amount of fuel supply by the post-injection Po1 during combustion is changed according to the catalyst temperature. By so doing, the oxygen concentration at the time of supply of fuel (hydrocarbons) into the exhaust by the post-injection Po2 after combustion is adjusted so that the catalyst temperature during S purge is maintained at as constant a temperature as possible. When the fuel injection volume by the post-injection Po1 during combustion is increased, the oxygen concentration of the exhaust lowers, and the temperature of the NOₓ storage catalyst 52 falls accordingly. When the fuel injection volume by the post-injection Po1 during combustion is decreased, on the other hand, the oxygen concentration of the exhaust increases, and the temperature of the NOₓ storage catalyst 52 rises accordingly. Fluctuations in the amount of fuel supply by the post-injection Po1 during combustion are less influential on the engine-generated torque than are fluctuations in the amount of fuel supply by the pre-injection Pu, main-injection Ma and after-injection Af as the main injection. Hence, torque fluctuations can be suppressed by the adjustment of the oxygen concentration of the exhaust resulting from changes in the amount of fuel supply by the post-injection Po1 during combustion.

The above-mentioned adjustment of the fuel injection volume by the post-injection Po1 during combustion, namely, the adjustment of the oxygen concentration of the exhaust, is performed, as appropriate, based on the temperature of the NOₓ storage catalyst 52 (catalyst temperature). That is, an oxygen concentration adjusting means 72 of the ECU 70 controls the fuel injection valve 33 based on the temperature of the NOₓ storage catalyst 52 (catalyst temperature) to change, as appropriate, the fuel injection volume by the post-injection Po1 during combustion, thereby adjusting the oxygen concentration of the exhaust. In the present embodiment, the temperature of the NOₓ storage catalyst 52 (catalyst temperature) is found based on the results of detection by the exhaust temperature sensor 55 provided near the exit of the NOₓ storage catalyst 52.

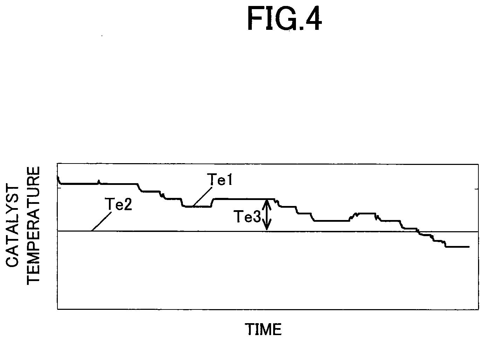

Concretely as shown in Fig. 4, the oxygen concentration adjusting means 72 changes, as appropriate, the injection period t1 of the fuel injection valve 33 by the post-injection Po1 during combustion in accordance with a temperature difference Te3 between the temperature of the NOₓ storage catalyst 52, (catalyst temperature) Te1, based on the results of detection by the exhaust temperature sensor 55 and a set temperature Te2 which has been set beforehand. The set temperature Te2 is set, for example, at a value in the vicinity of the minimum temperature of the NOₓ storage catalyst 52 necessary for S purge.

During the rich continuation period Ta, when the catalyst temperature Te1 is higher than the set temperature Te2 , for example, the oxygen concentration adjusting means 72 increases the fuel injection volume as the temperature difference Te3 between the catalyst temperature Te1 and the set temperature Te2 increases. In other words, the higher the catalyst temperature Te1, the longer the injection period t1 is rendered to lower the oxygen concentration of the exhaust. When the catalyst temperature Te1 is lower than the set temperature Te2, on the other hand, the oxygen concentration adjusting means 72 decreases the fuel injection volume as the temperature difference Te3 increases. In other words, the lower the catalyst temperature Te1, the shorter the injection period t1 is rendered to raise the oxygen concentration of the exhaust. By so doing, the catalyst temperature Te1 can be raised or lowered, so that the catalyst temperature Te1 becomes easier to maintain at a nearly constant temperature (in the present embodiment, the set temperature Te2).

During the rich interruption period Tb, the air-fuel ratio of the exhaust is leaned, and the catalyst temperature Te1 lowers accordingly. Thus, even in a state where the catalyst temperature Te1 is higher than the set temperature Te2, the implementation of the rich interruption period Tb makes the catalyst temperature Te1 prone to be lower than the set temperature Te2. During the rich interruption period Tb, therefore, the oxygen concentration adjusting means 72 preferably decreases the fuel injection volume by the post-injection Po1 during combustion (injection period t1) to raise the oxygen concentration of the exhaust, no matter how the temperature difference Te3 between the catalyst temperature Te1 and the set temperature Te2 is great.

By this procedure, the air-fuel ratio of the exhaust discharged from the NOₓ storage catalyst 52 is leaned in a relatively short time. In short, the rich interruption period Tb, the period during which the catalyst temperature Te1 tends to lower, is shortened. As a result, a fall in the catalyst temperature Te1 can be curtailed.

The present invention is a novel invention established on the new finding that when the air-fuel ratio of the NOₓ storage catalyst 52 (catalyst air-fuel ratio) is rich during the regeneration process, the catalyst air-fuel ratio of the exhaust flowing into the catalyst is shifted to the lean side, whereby the catalyst temperature Te1 rises.

Immediately after start of the rich continuation period Ta, the catalyst air-fuel ratio is lean. Thus, the regeneration process execution means 71 exercises F/F (feedforward) control of the fuel injection valve 33 to enrich the catalyst air-fuel ratio at an early stage, when the rich continuation period Ta is started. Concretely, in the post-inj ection Po2 after combustion, the interval between injections of fuel by the fuel injection valve 33, (i.e., lean time) T1, is made shorter than the time during which fuel is injected, (i.e., rich time) Tr (see Fig. 2). That is, the R/L ratio, the ratio between the rich time Tr and the lean time T1, is rendered lower than the initial value. By this measure, the fuel injected from the fuel injection valve 33 per unit time by the post-injection Po2 after combustion is increased to achieve early enrichment of the catalyst air-fuel ratio.

The F/F control of the post-injection Po2 after combustion by the fuel injection valve 33 is finishedwhenthe catalyst air-fuel ratio becomes richer than a target air-fuel ratio which has been set beforehand (for example, the target air-fuel ratio is a stoichiometric air-fuel ratio). Then, the rich time Tr and the lean time T1 in the post-injection Po2 after combustion are F/B(feedback)-controlled based on the catalyst air-fuel ratio.

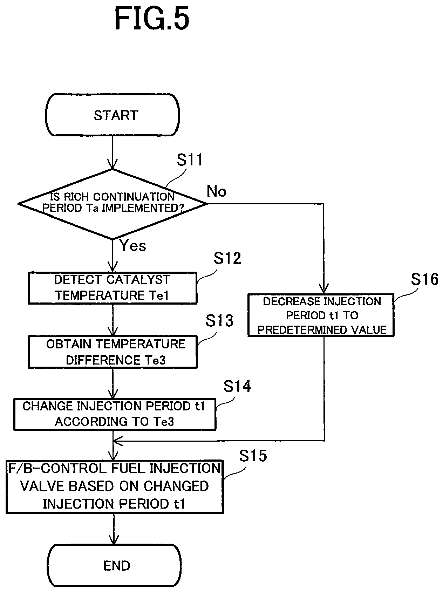

The change of the fuel injection volume (injection period t1) based on the catalyst temperature will be described further by reference to the flow chart of Fig. 5.

As shown in Fig. 5, when Spurge is implemented, it is determined in step S11 whether the period is the rich continuation period Ta or not. If a determination of the rich continuation period Ta is made (step S11: YES), the program proceeds to step S12. In step S12, the temperature Te1 of the NOₓ storage catalyst 52 based on the results of detection by the exhaust temperature sensor 55 is found. Then, in step S13, the temperature difference Te3 between the catalyst temperature Te1 and the set temperature Te2 is obtained. In step S14, the oxygen concentration adjusting means 72 changes the fuel injection volume (injection period t1) in the post-injection Po1 during combustion, according to the temperature difference Te3, for example, by reference to a prestored map or the like. If it is desired to raise the catalyst temperature Te1, for example, the injection period t1 is shortened to increase the oxygen concentration of the exhaust. Thereafter, the post-injection Po1 during combustion of the fuel injection valve 33 is F/B-controlled based on the changed injection period t1 to continue the regeneration process (step S15).

If it is determined in step S11 that the period is not the rich continuation period Ta, that is, if a determination of the rich interruption period Tb is made (step S11: NO), in step S16, the oxygen concentration adjusting means 72 decreases the injection period t1 in the post-injection Po1 during combustion to a predetermined value (minimum value), irrespective of the temperature difference Te3, to raise the oxygen concentration of the exhaust. Then, the program proceeds to step S15.

With the present invention, as described above, the fuel injection volume (inj ection period t1) by the fuel injection valve 33 is changed according to the temperature difference Te3, during the regeneration process (S purge), to adjust the oxygen concentration of the exhaust. Thus, the temperature of the NOₓ storage catalyst (exhaust purification catalyst) 52 can be regulated appropriately. That is, it becomes easy to maintain the temperature of the NOₓ storage catalyst 52 at a nearly constant temperature, without changing the air- fuel ratio of the NOₓ storage catalyst 52 beyond a required range. In association with this advantage, exhaust components can be efficiently released from the catalyst by the regeneration process (S purge), and the time to the completion of S purge can be shortened.

The present invention has been described in regard to its embodiment, but it is to be noted that the present invention is in no way limited to this embodiment as long as it remains under the scope of the present set of claims.

In the foregoing embodiment, the oxygen concentration adjusting means changes the fuel injection volume by the post-injection during combustion to adjust the oxygen concentration of the exhaust. Another example which is not covered by the scope of the invention is the following: if the influence on the engine-generated torque is not problematic to the running of the vehicle, for example, the oxygen concentration of the exhaust may be adjusted by changing the amount of fuel supply by main injection.

In the above-described embodiment, moreover, S purge is exemplified as a regeneration process, but the present invention is not limited to this embodiment. For example, the present invention can be applied in performing NOₓ purge.

In the above embodiment, moreover, the S purge technique is exemplified in which the reducing agent is intermittently supplied during the rich continuation period to maintain the catalyst in a rich state. However, the present invention is not limited to this embodiment. For example, the present invention can be applied to a technique which comprises supplying the reducing agent continuously during the rich continuation period to enrich the catalyst.

In the above embodiment, moreover, post-injection after combustion is performed from the fuel injection valve to adjust the air-fuel ratio of the exhaust. However, it is permissible to provide an injector, separately, at a predetermined position of the exhaust pipe, for example, near the entrance to the oxidation catalyst, and to inject fuel from this injector into the exhaust pipe, instead of performing post-injection after combustion. In this case, a reducing agent other than fuel (i.e., hydrocarbon) may be injected from the injector.

In the above embodiment, additionally, the diesel engine is taken as an example for illustration, but needless to say, the present invention can be applied to other engines.

Reference signs used in the description are listed as below:
- 10: Engine
- 11: Engine body
- 12: Cylinder head
- 13: Cylinder block
- 14: Cylinder bore
- 15: Piston
- 16: Connecting rod
- 17: Crankshaft
- 18: Combustion chamber
- 19: Intake port
- 20: Intake manifold
- 21: Intake pipe
- 22: Intake valve
- 23: Exhaust port
- 24: Exhaust manifold
- 25: Exhaust pipe (exhaust path)
- 26: Exhaust valve
- 27: Turbocharger
- 28: Intercooler
- 29: Throttle valve
- 30: EGR pipe
- 31: EGR cooler
- 32: EGR valve
- 33: Fuel injection valve
- 34: Common-rail
- 35: Supply pump
- 50: Exhaust purification apparatus
- 51: Oxidation catalyst
- 52: NOₓ storage catalyst
- 53: DPF
- 55: Exhaust temperature sensor
- 56: Air-fuel ratio sensor
- 70: ECU
- 71: Regeneration process execution means
- 72: Oxygen concentration adjusting means

## Claims

1. An exhaust purification apparatus of an engine, comprising: fuel injection means (33) for injecting fuel into a cylinder of an engine (10);
an exhaust purification catalyst (52) provided in an exhaust path (25) of the engine for purifying an exhaust;
temperature detection means (55) for detecting a temperature (Te1) of the exhaust purification catalyst;
regeneration process execution means (71) for performing a regeneration process which supplies a hydrocarbon into the exhaust flowing into the exhaust purification catalyst to keep rich an air-fuel ratio of the exhaust flowing out of the exhaust purification catalyst, and which renders the temperature of the exhaust purification catalyst equal to or higher than a set temperature (Te2) to release exhaust components stored in the exhaust purification catalyst; and
oxygen concentration adjusting means (72) for adjusting an oxygen concentration of the exhaust at a time of supply of the hydrocarbon by the regeneration process execution means, in accordance with a temperature difference (Te3) between the temperature of the exhaust purification catalyst detected by the temperature detection means and the set temperature, during execution of the regeneration process by the regeneration process execution means, wherein
the oxygen concentration adjusting means (72) controls the fuel injection means (33) to change an amount of the fuel burned in the cylinder of the engine (10), and the oxygen concentration adjusting means (72) changes a fuel injection volume by post-injection (Po1) during combustion to be performed with a timing which continues from combustion by main injection and with which combustion is possible.

2. The exhaust purification apparatus of an engine according to claim 1, **characterized in that**
the oxygen concentration adjusting means (72) lowers the oxygen concentration of the exhaust as the temperature difference (Te3) becomes greater when the temperature (Te1) of the exhaust purification catalyst (52) is higher than the set temperature (Te2).

3. The exhaust purification apparatus of an engine according to claim 1 or 2, **characterized in that**
the oxygen concentration adjusting means (72) raises the oxygen concentration of the exhaust as the temperature difference (Te3) becomes greater when the temperature (Te1) of the exhaust purification catalyst (52) is lower than the set temperature (Te2).

4. The exhaust purification apparatus of an engine according to any one of claims 1 to 3, **characterized in that**
the regeneration process execution means (71) performs, with a predetermined timing, a rich interruption process in which supply of a reducing agent into the exhaust is interrupted to lean the air-fuel ratio of the exhaust flowing out of the exhaust purification catalyst, and
the oxygen concentration adjusting means (72) raises the oxygen concentration of the exhaust, regardless of the temperature difference (Te3) between the temperature (Te1) of the exhaust purification catalyst (52) and the set temperature (Te2), during a period (Tb) during which the rich interruption process is performed.

5. The exhaust purification apparatus of an engine according to any one of claims 1 to 4, **characterized in that**
the regeneration process execution means (71) performs post-injection (Po2) after combustion, in which the fuel is injected from the fuel injection means (33) after combustion by main injection, thereby supplying the hydrocarbon into the exhaust.

6. The exhaust purification apparatus of an engine according to claim 5, **characterized in that**
the regeneration process execution means (71) exercises feedforward control such that an interval between implementations of the post-injection (Po2) after combustion by the fuel injection means (33) is shorter than a period during which fuel is injected.

7. The exhaust purification apparatus of an engine according to claim 6, **characterized in that**
the regeneration process execution means (71) terminates the feedforward control when the air-fuel ratio of the exhaust is richer than a predetermined air-fuel ratio, which has been set beforehand, within a rich continuation period (Ta) of the regeneration process.

8. The exhaust purification apparatus of an engine according to claim 7, **characterized in that**
the regeneration process execution means (71) exercises feedback control of a fuel injection volume from the fuel injection means (33) so as to bring the air-fuel ratio of the
exhaust close to a target air-fuel ratio after terminating the feedforward control.

## Patentansprüche

1. Abgasreinigungsvorrichtung eines Motors, die aufweist:
eine Kraftstoffeinspritzeinrichtung (33) zum Einspritzen von Kraftstoff in einen Zylinder eines Motors (10);
einen Abgasreinigungskatalysator (52), der in einem Abgasweg (25) des Motors vorgesehen ist, zum Reinigen eines Abgases;
eine Temperaturdetektionseinrichtung (55) zum Detektieren einer Temperatur (Te1) des Abgasreinigungskatalysators;
eine Regenerationsverfahren-Ausführeinrichtung (71) zum Durchführen eines Regenerationsverfahrens, das einen Kohlenwasserstoff dem Abgas zuführt, das in den Abgasreinigungskatalysator strömt, um ein Luft/Kraftstoff-Verhältnis des aus dem Abgasreinigungskatalysator strömenden Abgases fett zu halten, und das die Temperatur des Abgasreinigungskatalysators mindestens zu einer festgelegten Temperatur (Te2) macht, um Abgaskomponenten freizusetzen, die im Abgasreinigungskatalysator gespeichert sind; und
eine Sauerstoffkonzentration-Einstelleinrichtung (72) zum Einstellen einer Sauerstoffkonzentration des Abgases bei Zufuhr des Kohlenwasserstoffs durch die Regenerationsverfahren-Ausführeinrichtung in Übereinstimmung mit einer Temperaturdifferenz (Te3) zwischen der durch die Temperaturdetektionseinrichtung detektierten Temperatur des Abgasreinigungskatalysators und der festgelegten Temperatur bei Ausführung des Regenerationsverfahrens durch die Regenerationsverfahren-Ausführeinrichtung, wobei
die Sauerstoffkonzentration-Einstelleinrichtung (72) die Kraftstoffeinspritzeinrichtung (33) steuert, um eine Menge des im Zylinder des Motors (10) verbrannten Kraftstoffs zu ändern, und die Sauerstoffkonzentration-Einstelleinrichtung (72) ein Kraftstoffeinspritzvolumen durch Nacheinspritzung (Po1) bei Verbrennung ändert, die mit einem Timing durchzuführen ist, das sich von Verbrennung durch Haupteinspritzung fortsetzt und mit dem Verbrennung möglich ist.

2. Abgasreinigungsvorrichtung eines Motors nach Anspruch 1, **dadurch gekennzeichnet, dass**
die Sauerstoffkonzentration-Einstelleinrichtung (72) die Sauerstoffkonzentration des Abgases mit zunehmender Temperaturdifferenz (Te3) senkt, wenn die Temperatur (Te1) des Abgasreinigungskatalysators (52) höher als die festgelegte Temperatur (Te2) ist.

3. Abgasreinigungsvorrichtung eines Motors nach Anspruch 1 oder 2, **dadurch gekennzeichnet, dass**
die Sauerstoffkonzentration-Einstelleinrichtung (72) die Sauerstoffkonzentration des Abgases mit zunehmender Temperaturdifferenz (Te3) steigert, wenn die Temperatur (Te1) des Abgasreinigungskatalysators (52) niedriger als die festgelegte Temperatur (Te2) ist.

4. Abgasreinigungsvorrichtung eines Motors nach einem der Ansprüche 1 bis 3, **dadurch gekennzeichnet, dass**
die Regenerationsverfahren-Ausführeinrichtung (71) mit einem vorbestimmten Timing ein Fett-Unterbrechungsverfahren durchführt, in dem die Zufuhr eines Reduktionsmittels in das Abgas unterbrochen wird, um das Luft/Kraftstoff-Verhältnis des aus dem Abgasreinigungskatalysator strömenden Abgases abzumagern, und
die Sauerstoffkonzentration-Einstelleinrichtung (72) die Sauerstoffkonzentration des Abgases unabhängig von der Temperaturdifferenz (Te3) zwischen der Temperatur (Te1) des Abgasreinigungskatalysators (52) und der festgelegten Temperatur (Te2) in einer Periode (Tb) steigert, in der das Fett-Unterbrechungsverfahren durchgeführt wird.

5. Abgasreinigungsvorrichtung eines Motors nach einem der Ansprüche 1 bis 4, **dadurch gekennzeichnet, dass**
die Regenerationsverfahren-Ausführeinrichtung (71) Nacheinspritzung (Po2) nach Verbrennung durchführt, bei der der Kraftstoff aus der Kraftstoffeinspritzeinrichtung (33) nach Verbrennung durch Haupteinspritzung eingespritzt wird, wodurch der Kohlenwasserstoff dem Abgas zugeführt wird.

6. Abgasreinigungsvorrichtung eines Motors nach Anspruch 5, **dadurch gekennzeichnet, dass**
die Regenerationsverfahren-Ausführeinrichtung (71) Vorwärtsregelung so ausübt, dass ein Intervall zwischen Realisierungen der Nacheinspritzung (Po2) nach Verbrennung durch die Kraftstoffeinspritzeinrichtung (33) kürzer als eine Periode ist, in der Kraftstoff eingespritzt wird.

7. Abgasreinigungsvorrichtung eines Motors nach Anspruch 6, **dadurch gekennzeichnet, dass**
die Regenerationsverfahren-Ausführeinrichtung (71) die Vorwärtsregelung beendet, wenn das Luft/Kraftstoff-Verhältnis des Abgases fetter als ein vorbestimmtes Luft/ Kraftstoff-Verhältnis, das vorab festgelegt wurde, in einer Fett-Fortsetzungsperiode (Ta) des Regenerationsverfahrens ist.

8. Abgasreinigungsvorrichtung eines Motors nach Anspruch 7, **dadurch gekennzeichnet, dass**
die Regenerationsverfahren-Ausführeinrichtung (71) Rückkopplungsregelung eines Kraftstoffeinspritzvolumens aus der Kraftstoffeinspritzeinrichtung (33) ausübt, um das Luft/Kraftstoff-Verhältnis des Abgases einem Soll-Luft/Kraftstoff-Verhältnis nach Beenden der Vorwärtsregelung anzunähern.

## Revendications

1. Appareil de purification de gaz d'échappement d'un moteur, comprenant :
des moyens d'injection de carburant (33) pour injecter un carburant dans un cylindre d'un moteur (10) ;
un pot catalytique de purification de gaz d'échappement (52) fourni dans une voie de gaz d'échappement (25) du moteur pour purifier des gaz d'échappement ;
des moyens de détection de température (55) pour détecter une température (Te1) du pot catalytique de purification de gaz d'échappement ;
des moyens d'exécution de processus de régénération (71) pour effectuer un processus de régénération fournissant un hydrocarbure dans les gaz d'échappement s'écoulant dans le pot catalytique de purification de gaz d'échappement pour maintenir un rapport air-carburant élevé des gaz d'échappement sortant du pot catalytique de purification de gaz d'échappement, et rendant la température du pot catalytique de purification de gaz d'échappement supérieure ou égale à une température de consigne (Te2) pour libérer des composants de gaz d'échappement stockés dans le pot catalytique de purification de gaz d'échappement ; et
des moyens d'ajustement de concentration d'oxygène (72) pour ajuster une concentration d'oxygène des gaz d'échappement au moment de l'alimentation de l'hydrocarbure par les moyens d'exécution de processus de régénération, en fonction d'une différence de température (Te3) entre la température du pot catalytique de purification de gaz d'échappement détectée par les moyens de détection de température et la température de consigne, au cours de l'exécution du processus de régénération par les moyens d'exécution de processus de régénération, dans lequel les moyens d'ajustement de concentration d'oxygène (72) commandent aux moyens d'injection de carburant (33) de changer une quantité du carburant brûlé dans le cylindre du moteur (10), et les moyens d'ajustement de concentration d'oxygène (72) changent un volume d'injection de carburant par post-injection (Po1) au cours de la combustion à effectuer avec un timing continuant depuis la combustion par l'injection principale et avec lequel la combustion est possible.

2. Appareil de purification de gaz d'échappement d'un moteur selon la revendication 1, **caractérisé en ce que**
les moyens d'ajustement de concentration d'oxygène (72) réduisent la concentration d'oxygène des gaz d'échappement au fur et à mesure que la différence de température (Te3) augmente lorsque la température (Te1) du pot catalytique de purification de gaz d'échappement (52) est supérieure à la température de consigne (Te2).

3. Appareil de purification de gaz d'échappement d'un moteur selon la revendication 1 ou 2, **caractérisé en ce que**
les moyens d'ajustement de concentration d'oxygène (72) augmentent la concentration d'oxygène des gaz d'échappement au fur et à mesure de l'augmentation de la différence de température (Te3) lorsque la température (Te1) du pot catalytique de purification de gaz d'échappement (52) est inférieure à la température de consigne (Te2).

4. Appareil de purification de gaz d'échappement d'un moteur selon l'une quelconque des revendications 1 à 3, **caractérisé en ce que**
les moyens d'exécution de processus de régénération (71) effectuent, avec un timing prédéterminé, un processus d'interruption riche dans lequel l'alimentation d'un agent réducteur dans les gaz d'échappement est interrompue pour réduire le rapport air-carburant des gaz d'échappement sortant du pot catalytique de purification de gaz d'échappement, et
les moyens d'ajustement de concentration d'oxygène (72) augmentent la concentration d'oxygène des gaz d'échappement, indépendamment de la différence de température (Te3) entre la température (Te1) du pot catalytique de purification de gaz d'échappement (52) et la température de consigne (Te2), pendant une période (Tb) au cours de laquelle le processus d'interruption riche est effectué.

5. Appareil de purification de gaz d'échappement d'un moteur selon l'une quelconque des revendications 1 à 4, **caractérisé en ce que**
les moyens d'exécution de processus de régénération (71) effectuent une post-injection (Po2) après la combustion, dans laquelle le carburant est injecté depuis les moyens d'injection de carburant (33) après la combustion par l'injection principale, en alimentant de ce fait l'hydrocarbure dans les gaz d'échappement.

6. Appareil de purification de gaz d'échappement d'un moteur selon la revendication 5, **caractérisé en ce que**
les moyens d'exécution de processus de régénération (71) effectuent une commande d'anticipation de sorte qu'un intervalle entre des réalisations de la post-injection (Po2) après la combustion par les moyens d'injection de carburant (33) soit plus court qu'une période au cours de laquelle le carburant est injecté.

7. Appareil de purification de gaz d'échappement d'un moteur selon la revendication 6, **caractérisé en ce que**
les moyens d'exécution de processus de régénération (71) terminent la commande d'anticipation lorsque le rapport air-carburant des gaz d'échappement est supérieur à un rapport air-carburant prédéterminé, qui a été réglé au préalable, au cours d'une période de continuation riche (Ta) du processus de régénération.

8. Appareil de purification de gaz d'échappement d'un moteur selon la revendication 7, **caractérisé en ce que**
les moyens d'exécution de processus de régénération (71) effectuent une commande de rétroaction d'un volume d'injection de carburant depuis les moyens d'injection de carburant (33) de manière à rapprocher le rapport air-carburant des gaz d'échappement d'un rapport air-carburant cible après la terminaison de la commande d'anticipation.
